# EUROPÄISCHE PATENTSCHRIFT

(11) **EP 1 807 849 B1**
(45) Veröffentlichungstag und Bekanntmachung des Hinweises auf die Patenterteilung: **06.03.2013**
(21) Anmeldenummer: 05801654.4
(22) Anmeldetag: 03.11.2005
(51) Int. Cl.: H01G 4/38

(54) **ENERGIESPEICHER AUS DOPPELSCHICHT-KONDENSATOREN, VERWENDUNG EINES SOLCHEN ENERGIESPEICHERS BEI SCHIENENFAHRZEUGEN UND ZUGEHÖRIGES SCHIENENFAHRZEUG**
ENERGY STORE COMPOSED OF DOUBLE-LAYER CAPACITORS, USE OF SUCH AN ENERGY STORE IN RAILWAY VEHICLES, AND ASSOCIATED RAILWAY VEHICLE
RESERVOIR D'ENERGIE CONSTITUE DE CONDENSATEURS A DOUBLE COUCHE, SON UTILISATION DANS DES VEHICULES SUR RAILS, ET VEHICULE SUR RAILS CORRESPONDANT

(30) Priorität: 05.11.2004 DE 102004054060
(43) Veröffentlichungstag der Anmeldung: 18.07.2007
(73) Patentinhaber: SIEMENS AKTIENGESELLSCHAFT, 80333 München (DE)
(72) Erfinder: GAUDENZ, Markus, Matthias, 91056 Erlangen (DE); HAHN, Alexander, 91341 Röttenbach (DE); RECHENBERG, Karsten, 91077 Dormitz (DE); WAIDHAS, Manfred, 90427 Nürnberg (DE)
(86) Internationale Anmeldenummer: PCT/EP2005/055717
(87) Internationale Veröffentlichungsnummer: WO 2006/048431

(56) Entgegenhaltungen:
- EP-A- 0 033 697
- EP-A- 0 514 840
- EP-A- 1 228 919
- FR-A- 1 038 253
- GB-A- 613 627
- GB-A- 2 173 041
- US-A1- 2003 047 302

## Beschreibung

Die Erfindung bezieht sich auf einen Energiespeicher aus Doppelschichtkondensatoren. Daneben bezieht sich die Erfindung auf die Verwendung eines solchen Energiespeichers bei Schienenfahrzeugen. Schließlich bezieht sich die Erfindung auch auf ein derartiges Schienenfahrzeug.

Doppelschichtkondensatoren dienen in nahezu idealer Weise zur kurzzeitigen Energieversorgung. Ihre Technik ist ausgereift (so genannte SuperCaps). Die Doppelschichtkondensatoren werden zu Modulen von bis zu über 100 einzelnen Kondensatoren zusammengeschaltet. Die Einsatzmöglichkeiten solcher Doppelschichtkondensatormodule hängen von der Leistungsfähigkeit der einzelnen Doppelschichtkondensatoren ab.

Erste Exemplare von Doppelschichtkondensatoren mit Kapazitäten ≥ 1F kamen nach 1970 auf den Markt. Erst als Einzelzellen mit Kapazitäten > 1000 F verfügbar waren, wurde die Zusammenschaltung mehrerer Kondensatoren praxisgerecht, um diese zur kurzzeitigen Bereitstellung hoher Leistungen zu verwenden. Insbesondere für Anwendungen in der Verkehrstechnik, z.B. für die Elektrotraktion, Unterwerke bei Schienenfahrzeugen, wird die Verschaltung zu größeren Modulen erforderlich, um sowohl den gegebenen Leistungs- als auch den Spannungsanforderungen zu genügen.

Insbesondere bei solchen Anwendungen, bei denen hohe Leistungen zu erwarten sind, wird in erheblichem Maß Verlustwärme anfallen. Zur Aufrechterhaltung eines sicheren Betriebes und zur Gewährleistung hoher Lebensdauern muss diese Verlustwärme zuverlässig und effizient abgeführt werden.

In bisherigen Prototypen bzw. Pilotanlagen von Doppelschicht-Kondensatormodulen wird letzterer Forderung dadurch Rechnung getragen, indem die einzelnen Kondensatoren oder das ganze Modul mit Kühlluft versorgt werden. Der Kühleffekt kann dabei auch durch Anbringen von separaten Kühlkörpern verstärkt werden.

Eine Luftkühlung bedeutet bei elektrischen Anlagen immer eine Begrenzung des Einbauortes. In Fällen, bei denen hohe Leistungen oft oder permanent zu erwarten sind, wird diese Art der Kühlung an Grenzen stoßen, insbesondere dann, wenn sich ändernde bzw. hohe Umgebungstemperaturen herrschen. Die Konsequenz ist, dass das Leistungsprofil entsprechend reduziert werden muss, um eine Schädigung des Moduls zu verhindern und um die Betriebssicherheit zu gewährleisten.

Aus der EP 0 514 840 A1 ist eine Kühlvorrichtung für mindestens einen Kondensator bekannt, bei der in einem Gehäuse für mehrere Kondensatoren Kühlkanäle zum Durchfluss eines flüssigen Kühlmittels gebildet werden. In der EP 0 033 697 A2 werden eine Mehrzahl von Kondensatoren in einer Halterung packetiert, die in ein Kühlbad tauchbar ist.

Aus der JP 11-54356 A ist auch bereits ein Energiespeicher aus Doppelschichtkondensator-Modulen bekannt, die zur Thermostatisierung in einem Flüssigkeitsbad angeordnet sind. Dabei beinhaltet jedes abgeschlossene Modul mehrere DoppelschichtKondensatoren und befinden sich mehrere solche Module im Flüssigkeitsbad innerhalb eines Gehäuses, das auf einer Seite einen Zugang und einen Abgang haben kann.

Davon ausgehend ist es Aufgabe der Erfindung, verbesserte Energiespeicher mit Doppelschichtkondensatoren zu schaffen, eine geeignete Anwendung vorzuschlagen und insbesondere derartige Anwendungen bei Schienenfahrzeuge konstruktiv zu realisieren.

Die Aufgabe wird erfindungsgemäß durch die Merkmale des Patentanspruches 1 gelöst. Eine vorteilhafte Anwendung ist im Patentanspruch 20 angegeben. Ein diesbezüglich ausgebildetes Schienenfahrzeug zur praktischen Anwendung der Erfindung ist Gegenstand des Patentanspruches 22. Weiterbildungen des Energiespeichers und insbesondere des diesbezüglichen Schienenfahrzeugs sind Gegenstand der Unteransprüche.

Gegenstand der Erfindung ist ein Energiespeichermodul mit Doppelschichtkondensatoren in einem Modulgehäuse, bei dem gleichermaßen Schnittstellen für eine elektrische Verbindung einerseits und eine Fluidverbindung andererseits vorhanden ist. Damit können solche Modulgehäuse in praktisch beliebiger Weise kombiniert werden.

Mit der Erfindung ist damit eine geeignete Durchflusskühlung für Doppelschichtkondensatoren geschaffen und eine vorteilhafte Verwendung bei Schienenfahrzeugen, bei dem mehrere Module gekoppelt werden, möglich. Bei einem diesbezüglich ausgestatteten Schienenfahrzeug können die Module in Leerräumen der Karosserie angeordnet sein.

Wie oben bereits ausgeführt, sind Flüssigkeitskühlungen von Energiespeichergeräten, auch von Geräten mit elektrischen und elektronischen Leistungsbauelementen, zwar bekannt. Speziell bei dem in der JP 11-54356 A beschriebenen Energiespeicher sind abgeschlossene Module im Flüssigkeitsbad einer singulären Gehäuseeinheit angeordnet, wobei aber insbesondere keine Kopplung mehrerer Gehäuseeinheiten möglich ist. Demgegenüber ist mit der Erfindung ein solcher Energiespeicher geschaffen, bei dem einzelne Gehäuseeinheiten miteinander koppelbar sind.

Mit der Erfindung werden also zur effektiven Abführung von Abwärme speziell aus einem Doppelschichtkondensator-Modul geeignete Maßnahmen bzw. -System, mit denen eine wirksame Verhinderung von durch Wärme bedingten Schädigungen bei solchen Modulen möglich ist, vorgeschlagen. Eine Überhitzung des Bauteils, d.h. Überschreiten der zulässigen Betriebstemperatur der Doppelschichtkondensatoren, könnte nämlich zur verringerten Lebensdauer bzw. zur Schädigung bzw. Doppelschicht der Kondensatoren selbst, beispielsweise zum Entweichen des Elektrolyten bis hin zum explosiven Abbrand führen. Durch die Erfindung wird insbesondere bei Schienenfahrzeugen die Beschränkung des Einbauortes für die Energiespeichermodule aufgehoben.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen jeweils in schematischer Darstellung die
Figuren 1 bis 5 unterschiedliche Alternativen eines Doppelschichtköndensatormoduls mit geeigneter Flüssigkeitskühlung,
Figuren 6 und 7 alternative Möglichkeiten der Ankopplung einzelner Doppelschichtkondensator-Module aneinander (LEGO-Prinzip),
Figur 8 ein Schienenfahrzeug, bei dem in unterschiedlichen Freiräumen wassergekühlte Module als Energiespeicher angeordnet sind, in Seitenansicht und
Figur 9 eine Schnittdarstellung des Fahrgastraumes in Figur 8 mit Leerräumen zur Aufnahme von Doppelschichtkondensator-Modulen mit Flüssigkeitskühlung.

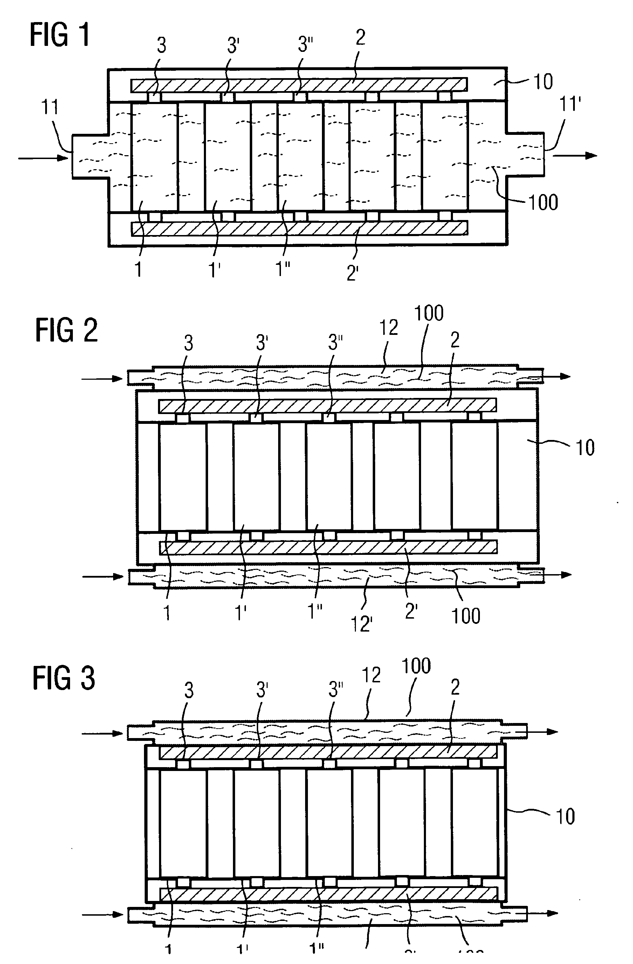

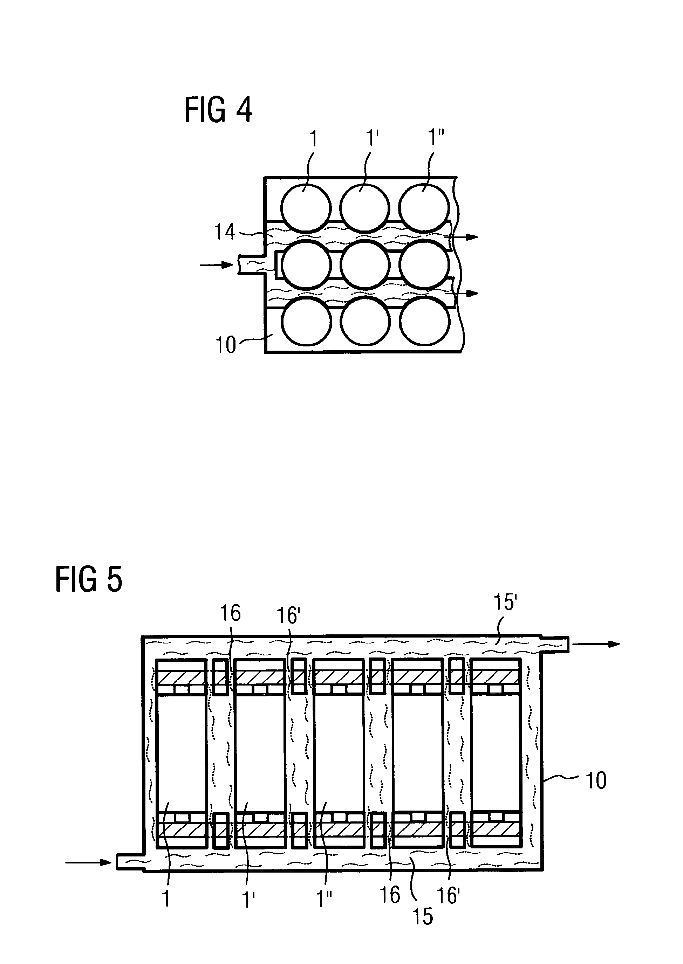

Von den Figuren 1 bis 5 sind die Figuren 1 bis 3 und 5 in schematischer Schnittdarstellung dargestellt, während speziell Figur 4 eine Draufsicht zeigt. Insbesondere die Figuren 1 bis 5 werden bezüglich ihrer gleichen Einheiten nachfolgend gemeinsam beschrieben.

In den Figuren ist 1 bis 5 jeweils ein Modulgehäuse 10 dargestellt, das als Normgehäuse im Wesentlichen gleiche äußere Abmessungen hat. In jedem Modulgehäuse 10 befinden sich eine Reihe von Doppelschichtkondensatoren 1, 1" , 1"' etc. Die Zahl der einzelnen Doppelschichtkondensatoren 1, 1", ... in einem Modul ist nicht festgelegt. Vorteilhafterweise sind zwischen 5 und 50 Doppelschichtkondensatoren vorhanden. Dabei sind beispielsweise 13 in einem Raster von 3xr oder 24 Doppelschichtkondensatoren in einem Raster von 4x6 angeordnet, und elektrisch in geeigneter Weise seriell und/oder parallel geschaltet. Innerhalb eines Moduls können beliebige Kombinationen vorgesehen sein.

In der Darstellung der Figuren bis 3 sowie 5 sind die einzelnen Doppelschichtkondensatoren 1, 1', 1", ... in den Figuren über elektrische Kontaktschienen 2, 2' elektrisch derart geschaltet, dass aufgrund einer kombinierten Parallel- und Serienschaltung eine geeignete Ausgangsspannung und -strom des einzelnen Moduls geliefert wird. Eine Mehrzahl von Modulen kann hintereinander geschaltet werden, so dass sich die geeignete Systemspannungs- und -leistungsebene ergibt. Es sind auch geeignete interne Seriell-/Parallel-Verbinder möglich. Bei den einzelnen Figuren 1 bis 5 geht es darum, geeignete Anordnungen zur Flüssigkeitskühlung vorzusehen. So wird speziell in Figur 1 unter Ausschluss der isolierten elektrischen Leitschienen 2, 2' und zugehöriger Kontakte, die beide in geeigneter Weise, beispielsweise durch eine Vergussmasse, isoliert sind ein Innenvolumen 11 im Modulgehäuse 10 gebildet, das komplett mit Kühlflüssigkeit 100 durchströmt wird. Es ist ein Einlass 12 und ein Auslass 13 vorhanden.

In Figur 2 sind bei prinzipiell gleichem Aufbau des Modulgehäuses 10 mit Doppelschichtkondensatoren 1, 1', ... und Leitschienen 2, 2' auf zwei gegenüber liegenden Gehäuseflächen Flüssigkeitskühlkörper 12, 12', die jeweils separat mit Kühlflüssigkeit 100 durchströmt werden, angeordnet. Durch die Anordnung der Flüssigkeitskühlkörper 12, 12' oberhalb und/oder unterhalb des Moduls ergibt sich durch geeignete Ankopplung eine hinreichende Kühlwirkung. Gegebenenfalls kann ein einziger Kühlkörper ausreichend sein.

In Figur 3 ist ein Modulgehäuse gemäß Figur 2 derart abgewandelt, dass sich die Flüssigkeitskühlkörper unmittelbar auf den Parallel- und Seriellverbindern 2, 2' befinden. Damit wird die Wärmeabfuhr verbessert.

Gemäß Figur 4 ist ein Modulgehäuse 10 derart abgewandelt, dass innerhalb des Modulgehäuses und die Doppelschichtkondensatoren herum ein konturfähiger Schlauch 14 angeordnet ist, in dem das Kühlmedium strömt. Durch Anwendung der konturfähigen Schläuche werden insbesondere die einzelnen Doppelschichtkondensatoren 1, 1', 1",.., unmittelbar gekühlt.

Eine Kombination der vorher anhand der einzelnen Beispiele dargestellten Prinzipien ergibt sich Figur 5. Hier sind bei einem Modulgehäuse 10 außen Flüssigkeitskühlkörper 15 bzw. 15' vorhanden, die über Verteilerstrukturen 16, 16', 16", ... zur gleichmäßigen Umströmung der Kondensatoren miteinander verbunden sind. Es ergibt sich hier die Möglichkeit, über einen Einlass an der einen Seite des Modulgehäuses 10 einen Flüssigkeitszustrom zu realisieren, während auf der anderen Seite über einen Auslass der Flüssigkeitsstrom weggeführt wird.

Letztere Realisierung ist insbesondere dann von Vorteil, wenn genormte Modulgehäuse geschaffen werden und die einzelnen Modulgehäuse mit jeweils elektrischen Verbindern und Flüssigkeitsverbindern, d.h. einem Flüssigkeitseinlass und einem Flüssigkeitsauslass, in ansonsten beliebiger Kombination miteinander gekoppelt werden können.

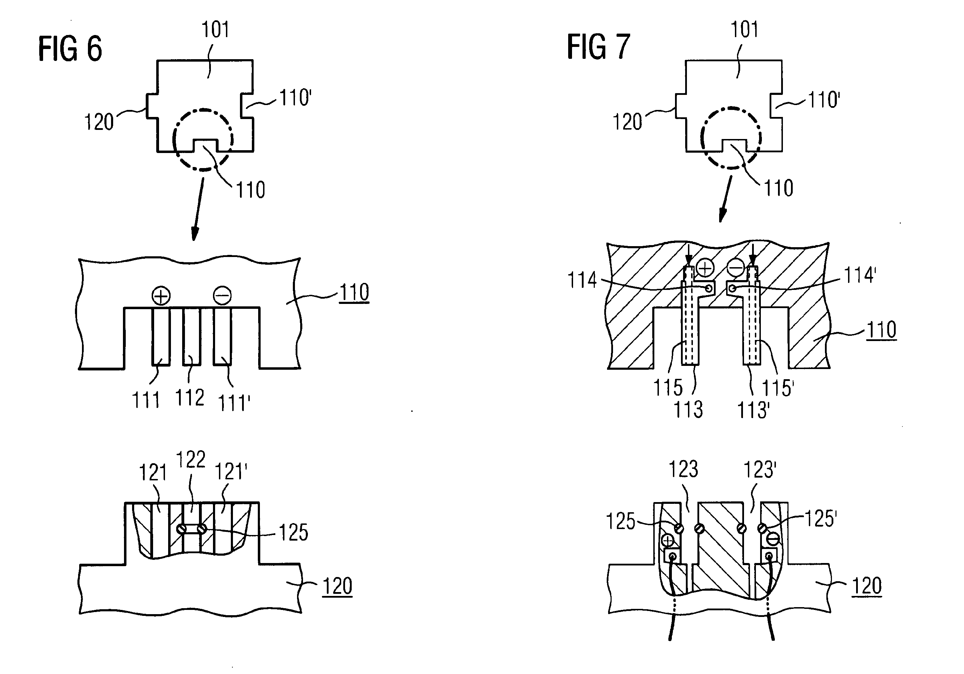

Anhand der Figuren 6 und 7 wird verdeutlicht, dass einzelne Module nach Art des LEGO- Baustein-Prinzips in praktisch beliebiger Weise miteinander koppelbar sind. Dafür benötigt jedes Modulgehäuse 10 an seinen Außenflächen Verbindungseinrichtungen für die elektrische Kontaktierung einerseits und für die Fluidverbindung andererseits. Diese Mittel können in geeigneter Weise ausgebildete Steckeinrichtungen sein, die jeweils an definierten Stellen einer Gehäusefläche ein Steckerteil und jeweils ein Aufnahmeteil umfassen. Einzelne Module können so hintereinander- oder parallelgeschaltet werden.

In Figur 6 ist dazu ein abstrahiertes Gehäuseelement 101 mit Verbindungseinrichtungen 110, 110' sowie 120 versehen, von denen 110, 110' weibliche Steckeinrichtungen (Buchse) und 120 männliche Steckeinrichtungen (Stecker) darstellen.

In Figur 6 erfolgt der elektrische Anschluss über Steckerteile 111 und 111' bei der Einrichtung 110 bzw.110', während die Kühlflüssigkeitsverbindung über ein Steckerteil 112 hergestellt wird. In der korrespondierenden Einrichtung 120 sind dazu die zugehörigen Gegenstücke 121, 121' und 122 vorhanden. Speziell für den Flüssigkeitsanschluss ist dabei eine Dichtung 125 notwendig.

Gemäß Figur 7 kann der Flüssigkeitseintritt über Innenlumina der elektrischen Anschlüsse erfolgen. Dafür sind die Medienschnittstellen 110, 120 mit Steckerteilen 113, 113' versehen, die Anschlüsse 114, 114' für die Schienenverteiler der Doppelschichtkondensatoren haben. Im Innenlumen 114, 114' der Steckteile 113, 113' wird das Kühlmedium geführt. Bei den zugehörigen Gegenstücken 123 bzw. 123' sind hier Dichtungen 125 bzw. 125' zur Verhinderung von Flüssigkeitsverlust vorhanden.

Bei Ausbildung von zwei Steckverbindungen an gegenüberliegenden Seiten der Modulgehäuse ist eine Hintereinanderschaltung möglich. Durch die dritte Steckverbindung entsprechend den Figuren 6 und 7 können Module auch parallel geschaltet werden, wobei aber nur ein flächenhafter Aufbau erfolgen kann.

Durch eine Anordnung mit sechs Steckverbindungen, d.h. eine Steckverbindung an jeder Fläche des quaderförmigen Modulgehäuses 10, wird ein beliebiger dreidimensionaler Aufbau des Energiespeichers möglich, so dass vorhandene Leerräume optimal genutzt werden können.

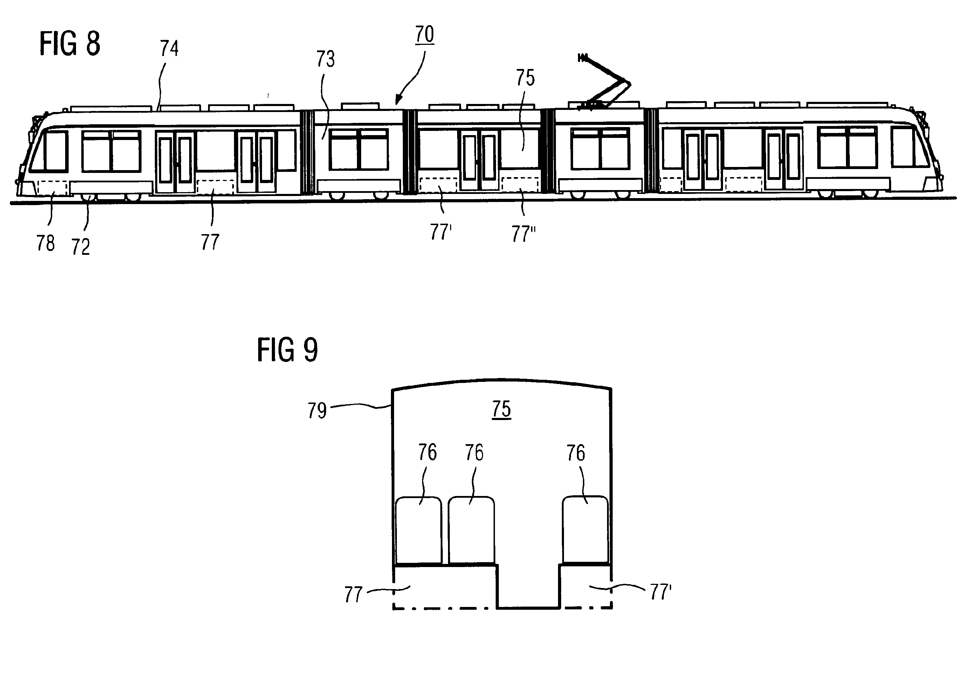

In Figur 8 ist ein Straßenbahnzug 70 angedeutet, wie er vom Stand der Technik der Schienfahrzeuge bekannt ist. Er besteht aus einem Chassis 71 mit einem Fahrwerk 72 mit Lauf- und Antriebsachsen, einem Karosserieaufbau 73, einem Dachaufbau 74 und einem inneren Fahrgastraum 75 mit Fahrgastsitzen 76, 76', .... Weiterhin sind die bei Straßenbahnen notwendigerweise vorhandenen Mittel zur elektrischen Energieversorgung vorhanden. Insbesondere sind dafür Stromabnehmer zur Stromabnahme aus Oberleitungen und elektrische Stromrichtereinheiten zur Ansteuerung der Fahrmotoren sowie Hilfsbetriebseinrichtungen vorhanden. Derartige Einrichtungen sind üblicherweise auf dem Dachaufbau des Schienenfahrzeuges in einem nach außen abgeschlossenen Container angeordnet.

Bisher werden auch zusätzliche Einheiten zur Energieversorgung, wie insbesondere auch Module mit durch Doppelschichtkondensatoren, im Container auf dem Dachaufbau des Straßenbahnzuges angeordnet. Durch einen Wärmeaustausch mit der Umgebungsluft kann insbesondere im Fahrbetrieb gleichermaßen die Kühlwirkung des Fahrtwindes ausgenutzt werden.

Im vorliegenden Fall ergibt sich nunmehr die Möglichkeit, in vorhandenen Leerräumen innerhalb der Straßenbahn, insbesondere unter den Fahrgastsitzen o. dgl., die Modulgehäuse mit Energiespeichern anzuordnen. Durch das Zusammenfügen der Modulgehäuse nach dem LEGO-Prinzip ist es dabei möglich, die vorhandenen Leer- und Freiräume jeweils in optimaler Weise komplett auszunutzen.

In Figur 9 ist dazu gezeigt, dass der Einbauort im Fahrgastraum 75 des Schienenfahrzeuges 70 so gestaltet ist, dass die einschlägigen Sicherheitsbestimmungen erfüllt sind. Dafür wird die Außenwand 79 des Karosserieaufbaus 73 unterhalb der Fahrgastsitze 76, 76', 76", ... nach innen gestülpt, wodurch der somit von der Fahrgastzelle 75 abgetrennte Raum nutzbar gemacht werden kann.

Durch letztere Anordnung ist den Sicherheitsbestimmungen, die eine Anordnung des Energiespeichers, insbesondere von mit flüssigen Elektrolyten versehenen Kondensatoren, im Fahrgastraum ausschließen, Rechnung getragen.

Insgesamt löst die Erfindung das Problem einer effizienten Wärmeausbringung, in dem einerseits in den einzelnen Modulen Hohlräume geschaffen oder vorhandene Hohlräume genutzt werden, um diese mit einem geeigneten flüssigen Kühlmedium zu durchströmen, welche die Abwärme als Zwischenmedium aufnimmt und diese aus dem Modul entfernt. Diese flüssigkeitsdurchströmten Module können darüber hinaus an jeweils geeigneten Orten im Schienenfahrzeug angeordnet werden. Ein Kontakt zur Umgebungsluft, insbesondere zum Fahrtwind, ist unnötig.

## Patentansprüche

1. Energiespeicher aus Doppelschichtkondensatoren, wobei jeweils mehrere Doppelschichtkondensatoren ein Modul mit einem Gehäuse bilden, denen ein Kühlmittel zugeordnet ist, **dadurch gekennzeichnet, dass** jedes Kondensatormodul (10) bis zu n, vorzugsweise 5 bis 50, insbesondere 24, Doppelschicht-Kondensatoren (1, 1', 1", ...) enthält und dass als Kühlmittel (11 bis 14) ein flüssiges Medium zum Durchströmen des Kondensatormodulgehäuses (10) und zur Entfernung der von den einzelnen Doppelschichtkondensatoren (1, 1', 1", ...) erzeugten Abwärme vorhanden ist, wobei jedes Modulgehäuse (10) Schnittstellen (101) zur elektrischen Verbindung einerseits und zur fluidischen Verbindung andererseits aufweist.

2. Energiespeicher nach Anspruch 1, **dadurch gekennzeichnet, dass** als Kühlmedium eine Kühlflüssigkeit (100) hoher Wärmekapazität und geringer Leitfähigkeit, beispielsweise entionisiertes Wasser, Transformatorenöl, verwendet wird.

3. Energiespeicher nach Anspruch 2, **dadurch gekennzeichnet, dass** sich die Doppelschichtkondensatoren (1, 1', 1", ...) komplett in einem Bad einer das Kondensatormodul (10) durchströmenden Kühlflüssigkeit (100) befinden, wobei die Kühlflüssigkeit (102) an der einen Seite einströmt und an der anderen Seite ausströmt (Fig. 1).

4. Energiespeicher nach Anspruch 2, **dadurch gekennzeichnet, dass** sich Flüssigkeitskühlkörper (12, 12') unterhalb und/oder oberhalb des einzelnen Kondensator-Moduls (10) befinden.

5. Energiespeicher nach Anspruch 1 oder Anspruch 2, **dadurch gekennzeichnet, dass** konturfähige Schläuche (14) für eine Aufnahme des Kühlmediums (100) vorhanden sind.

6. Energiespeicher nach einem der vorhergehenden Ansprüche mit einem Kühlmodul, **dadurch gekennzeichnet, dass** beim Kühlmodul (10) der Flüssigkeitszustrom unten und der Flüssigkeitsauslass diagonal hierzu oben erfolgt.

7. Energiespeicher nach Anspruch 6, **dadurch gekennzeichnet, dass** im Kühlmodul (15) Verteilerstrukturen (16, 16') zur Erzielung einer gleichmäßigen Beströmung der Doppelschichtkondensatoren (1, 1', 1") vorhanden sind.

8. Energiespeicher nach einem der vorhergehenden Ansprüche, **dadurch gekennzeichnet, dass** zur elektrischen Isolierung der Kondensator-Module (10) Vergussmassen oder Formteile mit hoher Wärmeleitfähigkeit verwendet werden.

9. Energiespeicher nach einem der vorhergehenden Ansprüche, **dadurch gekennzeichnet, dass** elektrische Parallel- und/oder Seriellverbinder (2, 3) mit zugehörigen Anschlüssen für die einzelnen Zellen vorhanden sind, die elektrisch isoliert sind.

10. Energiespeicher nach einem der vorhergehenden Ansprüche, **dadurch gekennzeichnet, dass** der Flüssigkeitsstrom geregelt ist, wodurch die Temperatur im Kondensatormodul (10) weitgehend konstant gehalten wird.

11. Energiespeicher nach einem der vorhergehenden Ansprüche, **dadurch gekennzeichnet, dass** das Gesamtsystem einen Wärmetauscher, der ggf. gebläseunterstützt arbeitet, beinhaltet.

12. Energiespeicher nach einem der vorhergehenden Ansprüche, **dadurch gekennzeichnet, dass** eine Kühlung nach dem Prinzip einer so genannten Heat-Pipe vorhanden ist.

13. Energiespeicher nach einem der vorhergehenden Ansprüche, **dadurch gekennzeichnet, dass** ein separates Filtersystem vorhanden ist, in das austretende Dämpfe oder andere gesundheitsschädliche Substanzen eingeleitet werden.

14. Energiespeicher nach einem der vorhergehenden Ansprüche, **dadurch gekennzeichnet, dass** das flüssige Kühlmedium (100) zur Aufnahme von Elektrolytdämpfen geeignet ist.

15. Energiespeicher nach einem der vorhergehenden Ansprüche, **dadurch gekennzeichnet, dass** zwecks Verbindung einzelner Kondensatormodule den Modulgehäusen (10) mit den Schnittstellen (101) zur elektrischen Verbindung einerseits und zur fluidischen Verbindung andererseits Schnittstellen-angepasste Verbindungsmittel (110, 120) zugeordnet sind.

16. Energiespeicher nach Anspruch 15, **dadurch gekennzeichnet, dass** die Einheiten modular skalierbar sind, wobei die modular skalierbaren Einheiten (10, 101) beim Aneinanderfügen und/oder Stapeln außer den Schnittstellen keine zusätzlichen Verbinder haben.

17. Energiespeicher nach Anspruch 15, **dadurch gekennzeichnet, dass** die Verbindungsmittel (110, 120) Steckeinrichtungen (121, 121') sind.

18. Energiespeicher nach Anspruch 17, **dadurch gekennzeichnet, dass** auf jedem Modulgehäuse (10) mindestens zwei, vorzugsweise drei bis sechs, Steckeinrichtungen (110, 110', 120) vorhanden sind.

19. Energiespeicher nach Anspruch 17 oder 18, **dadurch gekennzeichnet, dass** die Steckeinrichtungen (110, 110', 120) jeweils wenigstens einen Stecker (111) und jeweils wenigstens eine Buchse (121) umfassen.

20. Verwendung eines Energiespeichers nach Anspruch 1 oder einem der Ansprüche 2 bis 19 zur Energieversorgung eines Schienenfahrzeuges.

21. Verwendung nach Anspruch 20, **dadurch gekennzeichnet, dass** eine vorübergehende, insb. kurzzeitige, Energieversorgung des Schienenfahrzeuges (70) erfolgt.

22. Schienenfahrzeug mit einem Energiespeicher nach einem der Ansprüche 1 bis 19, der mehrere modulartig zusammengefasste Doppelschichtkondensatoren (1, 1', 1" , ...) und Mittel (11 - 16) zur Flüssigkeitskühlung der Kondensatormodule umfasst, wobei die Modulgehäuse (10) in Leerräumen (77,78) im Fahrzeug (70) angeordnet sind.

23. Schienenfahrzeug nach Anspruch 22, **dadurch gekennzeichnet, dass** die Kondensatormodule (10) nahe dem Antrieb angeordnet sind.

24. Schienenfahrzeug nach Anspruch 22, **dadurch gekennzeichnet, dass** die Kondensatormodule (10) unter den Fahrgastsitzen (76, 76', ... ) angeordnet sind, wozu ein abgeschlossener Leerraum (77) vorhanden ist.

25. Schienenfahrzeug nach Anspruch 24, **dadurch gekennzeichnet, dass** der Leerraum (77) durch die nach innen gestülpte Karosseriewandung (79) gebildet ist.

26. Schienenfahrzeug nach einem der Ansprüche 22 bis 24, **dadurch gekennzeichnet, dass** einzelne Kondensatormodule (10) zusammengeschaltet sind und den vorhandenen Leerraum (77, 78) ausfüllen.

## Claims

1. Energy store composed of double-layer capacitors, a plurality of double-layer capacitors in each case forming a module with a housing to which a coolant is assigned, **characterised in that** each capacitor module (10) contains up to n, preferably 5 to 50, in particular 24, double-layer capacitors (1, 1', 1'', ...) and that a liquid medium is used as a coolant (11 to 14) and flows through the capacitor module housing (10) eliminate the waste heat generated by the individual double-layer capacitors (1, 1', 1'', ...), each module housing (10) having interfaces (101) for electrical connection on the one hand and for fluidic connection on the other hand.

2. Energy store according to claim 1, **characterised in that** a liquid coolant (100) with a high thermal capacity and low conductivity, for example deionised water or transformer oil, is used as a coolant.

3. Energy store according to claim 2, **characterised in that** the double-layer capacitors (1, 1', 1", ...) are entirely located in a bath of a liquid coolant (100) flowing through the capacitor module (10), the liquid coolant (102) flowing in on one side and flowing out on the other side (Fig. 1).

4. Energy store according to claim 2, **characterised in that** liquid cooling elements (12, 12') are located underneath and/or above the individual capacitor module (10).

5. Energy store according to claim 1 or claim 2, **characterised in that** contour-compatible tubes (14) are provided for accommodating the coolant (100).

6. Energy store according to one of the preceding claims having a cooling module, **characterised in that** in the case of the cooling module (10) the liquid flows in at the bottom and flows out diagonally thereto at the top.

7. Energy store according to claim 6, **characterised in that** distributor structures (16, 16') for achieving an even flow through the double-layer capacitors (1, 1', 1" , ...) are provided in the cooling module (15).

8. Energy store according to one of the preceding claims, **characterised in that** potting compounds or moulded components with high thermal conductivity are used for the electrical insulation of the capacitor modules (10).

9. Energy store according to one of the preceding claims, **characterised in that** electrical parallel and/or serial connectors (2, 3) with associated terminals for the individual cells are provided, which are electrically insulated.

10. Energy store according to one of the preceding claims, **characterised in that** the flow of liquid is regulated, as a result of which the temperature in the capacitor module (10) is kept largely constant.

11. Energy store according to one of the preceding claims, **characterised in that** the overall system contains a heat exchanger which if necessary works with the aid of a blower.

12. Energy store according to one of the preceding claims, **characterised in that** cooling using the principle of a socalled heat pipe is provided.

13. Energy store according to one of the preceding claims, **characterised in that** a separate filter system is provided, into which escaping vapours or other substances injurious to health are fed.

14. Energy store according to one of the preceding claims, **characterised in that** the liquid coolant (100) is suitable for absorbing electrolytic vapours.

15. Energy store according to one of the preceding claims, **characterised in that** for the purpose of connecting individual capacitor modules interface-adapted connection means (110, 120) are assigned to the module housings (10) with the interfaces (101) for electrical connection on the one hand and for fluidic connection on the other hand.

16. Energy store according to claim 15, **characterised in that** the units are modularly scalable, the modularly scalable units (10, 101) having no additional connectors apart from the interfaces when joined together and/or stacked.

17. Energy store according to claim 15, **characterised in that** the connection means (110, 120) are plug-in devices (121, 121').

18. Energy store according to claim 17, **characterised in that** at least two, preferably three to six, plug-in devices (110, 110', 120) are provided on each module housing (10).

19. Energy store according to claim 17 or 18, **characterised in that** the plug-in devices (110, 110', 120) each comprise at least one plug (111) and at least one jack (121).

20. Use of an energy store according to claim 1 or one of claims 2 to 19 for supplying energy to a railway vehicle.

21. Use according to claim 20, **characterised in that** energy is supplied to the railway vehicle (70) temporarily, in particular on a short-term basis.

22. Railway vehicle with an energy store according to one of claims 1 to 19, which comprises a plurality of modularly assembled double-layer capacitors (1, 1', 1", ...) and means (11 - 16) for liquid cooling of the capacitor modules, the module housings (10) being disposed in free spaces (77, 78) in the vehicle (70).

23. Railway vehicle according to claim 22, **characterised in that** the capacitor modules (10) are disposed close to the drive.

24. Railway vehicle according to claim 22, **characterised in that** the capacitor modules (10) are disposed underneath the passenger seats (76, 76', ...), for which purpose a sealed free space (7) is provided.

25. Railway vehicle according to claim 24, **characterised in that** the free space (77) is formed by the inwardly turned bodywork wall (79).

26. Railway vehicle according to one of claims 22 to 24, **characterised in that** individual capacitor modules (10) are connected together and fill the free space (77, 78) provided.

## Revendications

1. Réservoir d'énergie composé de condensateurs à couche double, respectivement plusieurs condensateurs à couche double formant un module ayant un boîtier, auxquels est associé un fluide de refroidissement, **caractérisé en ce que** chaque module ( 10 ) de condensateur comporte jusqu'à n, de préférence de 5 à 50, notamment 24, condensateurs ( 1, 1', 1", ... ) à couche double et **en ce qu'**il y a comme fluide (11 à 14) de refroidissement un fluide liquide pour passer dans le boîtier ( 10 ) du module de condensateur et pour éliminer de la chaleur perdue produite par les divers condensateurs ( 1, 1', 1'', ... ) à couche double, chaque boîtier ( 10 ) de module ayant des interfaces ( 101 ) de liaison électrique, d'une part, et de liaison fluidique, d'autre part.

2. Réservoir d'énergie suivant la revendication 1, **caractérisé en ce qu'**il est utilisé comme fluide de refroidissement un liquide ( 100 ) de refroidissement de grande capacité calorifique et de petite conductibilité, par exemple de l'eau déminéralisée, de l'huile de transformateur.

3. Réservoir d'énergie suivant la revendication 2, **caractérisé en ce que** les condensateurs ( 1, 1', 1", ... ) à couche double se trouvent complètement dans un bain d'un liquide ( 100 ) de refroidissement passant dans le module ( 10 ) de condensateur, le liquide ( 102 ) de refroidissement entrant d'un côté et sortant de l'autre côté ( figure 1 ).

4. Réservoir d'énergie suivant la revendication 2, **caractérisé en ce que** des corps ( 12, 12' ) à refroidissement par le liquide se trouvent en dessous et/ou au-dessus des divers modules ( 10 ) de condensateur.

5. Réservoir d'énergie suivant la revendication 1 ou revendication 2, **caractérisé en ce qu'**il y a des conduits ( 14 ) souples aptes à prendre un contour pour la réception du fluide ( 100 ) de refroidissement.

6. Réservoir d'énergie suivant l'une des revendications précédentes comprenant un module de refroidissement, **caractérisé en ce que**, dans le module ( 10 ) de refroidissement, l'arrivée du liquide arrive par le bas et, en diagonale par rapport à cela, la sortie du liquide s'effectue par le haut.

7. Réservoir d'énergie suivant la revendication 6, **caractérisé en ce que**, dans un module ( 15 ) de refroidissement, il y a des structures ( 16, 16' ) formant répartiteur pour obtenir une irrigation uniforme des condensateurs ( 1, 1', 1", ... ) à couche double.

8. Réservoir d'énergie suivant l'une des revendications précédentes, **caractérisé en ce que**, pour isoler électriquement les modules ( 10 ) de condensateur, il est utilisé des compositions de scellement ou des pièces moulées d'une grande conductibilité calorifique.

9. Réservoir d'énergie suivant l'une des revendications précédentes, **caractérisé en ce qu'**il y a des connecteurs ( 2, 3 ) électriques en parallèle et/ou en série ayant des bornes associées pour les diverses cellules qui sont isolées électriquement.

10. Réservoir d'énergie suivant l'une des revendications précédentes, **caractérisé en ce que** le courant de liquide est réglé de manière à maintenir dans une grande mesure constante la température dans le module de condensateur.

11. Réservoir d'énergie suivant l'une des revendications précédentes, **caractérisé en ce que** tout le système contient un échangeur de chaleur qui fonctionne, le cas échéant, avec assistance par une soufflante.

12. Réservoir d'énergie suivant l'une des revendications précédentes, **caractérisé en ce qu'**il y a un refroidissement suivant le principe de ce que l'on appelle un heat-pipe.

13. Réservoir d'énergie suivant l'une des revendications précédentes, **caractérisé en ce qu'**il y a un système de filtration distinct, dans lequel sont envoyées des vapeurs qui sortent ou d'autres substances nuisibles pour la santé.

14. Réservoir d'énergie suivant l'une des revendications précédentes, **caractérisé en ce que** le fluide ( 100 ) de refroidissement liquide est propre à absorber des vapeurs d'électrolyte.

15. Réservoir d'énergie suivant l'une des revendications précédentes, **caractérisé en ce que**, en vue de la liaison de modules individuels de condensateur, il est associé au boîtier ( 10 ) de module des moyens ( 110, 120 ) de liaison adaptés aux interfaces, d'une part, pour la liaison électrique et, d'autre part, pour la liaison fluidique.

16. Réservoir d'énergie suivant la revendication 15, **caractérisé en ce que** les unités peuvent être mises à l'échelle de manière modulaire, les unités ( 10, 101 ) pouvant être mises à l'échelle de manière modulaire n'ayant pas de connecteur supplémentaire en-dehors des interfaces, lors de leur assemblage et/ou lors de leur empilage.

17. Réservoir d'énergie suivant la revendication 15, **caractérisé en ce que** les moyens ( 110, 120 ) de liaison sont des dispositifs ( 121, 121' ) à enfichage.

18. Réservoir d'énergie suivant la revendication 17, **caractérisé en ce qu'**il y a sur chaque boîtier ( 10 ) de module au moins deux, de préférence trois à six, dispositifs ( 110, 110', 120 ) à enfichage.

19. Réservoir d'énergie suivant la revendication 17 ou 18, **caractérisé en ce que** les dispositifs ( 110, 110', 120 ) à enfichage comprennent respectivement au moins une fiche ( 111 ) mâle et respectivement au moins une douille ( 121 ).

20. Utilisation d'une source d'énergie suivant la revendication 1 ou l'une des revendications 2 à 19, pour l'alimentation en énergie d'un véhicule ferroviaire.

21. Utilisation suivant la revendication 20, **caractérisée en ce qu'**il s'effectue une alimentation en énergie provisoire, notamment de courte durée, du véhicule ( 70 ) ferroviaire.

22. Véhicule ferroviaire ayant une source d'énergie suivant l'une des revendications 1 à 19, qui comprend plusieurs condensateurs ( 1, 1', 1", ... ) à couche double rassemblés sous la forme d'un module et des moyens ( 11 à 16 ) de refroidissement par du liquide des modules de condensateur, les boîtiers ( 10 ) de module étant disposés dans des espaces ( 77, 78 ) vides du véhicule ( 70 ).

23. Véhicule ferroviaire suivant la revendication 22, **caractérisé en ce que** les modules ( 10 ) de condensateur sont disposés près de l'entraînement.

24. Véhicule ferroviaire suivant la revendication 22, **caractérisé en ce que** les modules ( 10 ) de condensateur sont disposés sous les sièges ( 76, 76', ... ) de passager, un espace ( 77 ) vide fermé étant présent à cet effet.

25. Véhicule ferroviaire suivant la revendication 24, **caractérisé en ce que** l'espace ( 77 ) vide est formé par la paroi ( 79 ) de carrosserie retournée vers l'intérieur.

26. Véhicule ferroviaire suivant l'une des revendications 22 à 24, **caractérisé en ce que** les divers modules ( 10 ) de condensateur sont montés ensemble et remplissent l'espace ( 77, 78 ) vide présent.
